(19) Europäisches Patentamt
European Patent Office
Office européen des brevets

(11) **EP 4 596 591 A1**

(12) **EUROPEAN PATENT APPLICATION**

(43) Date of publication:
**06.08.2025  Bulletin 2025/32**

(21) Application number: **25155312.9**

(22) Date of filing: **31.01.2025**

(51) International Patent Classification (IPC):
**C08F 210/02** (2006.01)

(52) Cooperative Patent Classification (CPC):
(C-Sets available)
**C08F 210/02**                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.02.2024  KR 20240015515**

(71) Applicants:
• **SK innovation Co., Ltd.
Seoul 03188 (KR)**
• **SK Geo Centric Co., Ltd.
Seoul 03188 (KR)**

(72) Inventors:
• **LEE, Ho Seong**
  **34124 Daejeon (KR)**
• **LEE, Sang Ho**
  **51643 Changwon-si, Gyeongsangnam-do (KR)**
• **KIM, Dong Eun**
  **49426 Saha-gu, Busan (KR)**

(74) Representative: **Thoma, Michael
Lorenz Seidler Gossel
Rechtsanwälte Patentanwälte
Partnerschaft mbB
Widenmayerstraße 23
80538 München (DE)**

(54) **METHOD OF PRODUCING ETHYLENE-BASED COPOLYMER**

(57)    In a method of producing an ethylene-based copolymer according to the embodiments of the present disclosure, a monomer solution including a comonomer and monomethyl ether hydroquinone is discharged into a reactor through a first discharge unit. The ethylene monomer reacts with the comonomer by injecting it into the reactor. A content of the monomethyl ether hydroquinone in the monomer solution is adjusted to be 210 ppm or more based on a total weight of the comonomer.

EP 4 596 591 A1

(52) Cooperative Patent Classification (CPC): (Cont.)

C-Sets
**C08F 210/02, C08F 2/007;**
C08F 210/02, C08F 220/06

# EP 4 596 591 A1

**Description**

[BACKGROUND OF THE INVENTION]

1. Field of the Invention

The present disclosure relates to a method of producing an ethylene-based copolymer.

2. Description of the Related Art

An ethylene-based copolymer is utilized for various applications such as a sealing material, an adhesive, a packing material, an optical film and the like. For example, the ethylene-based copolymer may include an ethylene-carboxylic acid copolymer, an ethylene-acrylate copolymer, and an ethylene-(alkyl)acrylate copolymer.

The ethylene-based copolymer may be produced by polymerizing ethylene and a comonomer (e.g., carboxylic acid, acrylate, etc.) through a continuous reactor.

However, a self-polymerization may occur when ethylene or comonomer is exposed to high temperature or pressure in a process of supplying it to a reactor through a flow path, a pump, a compressor and the like.

When monomers are self-polymerized, equipment defects such as clogging, plugging, and flow path blocking of the above-described monomer introduction equipment may occur. Therefore, a production yield of the copolymer may be decreased and it may be difficult to uniformly repeat the process.

Methods of using a solvent or an additive together to suppress the self-polymerization of the monomers may be considered. However, side reactions may occur due to the solvent, and molecular weight adjustment may be limited due to a chain transfer performance inherent in the solvent. In order to directly block the above-described equipment defects, a design or study to efficiently suppress the self-polymerization in a monomer solution is required.

[SUMMARY OF THE INVENTION]

An object of the present disclosure is to provide a method of producing an ethylene-based copolymer for implementing improved process reliability and polymerization efficiency.

To achieve the above object, according to an aspect of the present disclosure, there is provided a method of producing an ethylene-based copolymer including: discharging a monomer solution including a comonomer and monomethyl ether hydroquinone into a reactor through a first discharge unit; and reacting an ethylene monomer with the comonomer by injecting the ethylene monomer into the reactor, wherein a content of the monomethyl ether hydroquinone in the monomer solution is 210 ppm or more based on a total weight of the comonomer.

In some embodiments, the content of the monomethyl ether hydroquinone in the monomer solution may be 210 ppm or more and less than 2,000 ppm based on the total weight of the comonomer.

In some embodiments, the step of reacting an ethylene monomer with the comonomer may include discharging the ethylene monomer into the reactor through a second discharge unit.

In some embodiments, the monomer solution and the ethylene monomer are introduced into the reactor through different paths, respectively.

In some embodiments, the monomer solution may be supplied from the first discharge unit to the reactor through a first discharge flow path, and the ethylene monomer may be supplied from the second discharge unit to the reactor through a second discharge flow path.

In some embodiments, a temperature in the first discharge unit and the first discharge flow path may be a crystallization temperature or higher of the comonomer.

In some embodiments, the temperature in the first discharge flow path may be adjusted within a range of Equation 1 below:

$$[\text{Equation 1}]$$

$$P + 500\ ^{\circ}\text{C} < 54.002 \times T < P + 3400\ ^{\circ}\text{C}$$

In Equation 1, P may be a discharge pressure of the first discharge unit measured in units of bar, and T may be the temperature in the first discharge flow path.

In some embodiments, a pressure in the first discharge unit may be 1,500 bar to 3,000 bar.

In some embodiments, the step of reacting an ethylene monomer with the comonomer may include injecting the ethylene monomer from the second discharge unit into the reactor after the monomer solution is supplied from the first discharge unit to the reactor.

In some embodiments, the comonomer may include a carboxylic acid monomer or an acrylate monomer.

In some embodiments, the carboxylic acid monomer may include acrylic acid or methacrylic acid.

In some embodiments, the method may further include supplying a lubricant composition into the first discharge unit.

According to the embodiments of the present disclosure, by using the monomethyl ether hydroquinone together with the comonomer, generation of a self-polymer of the comonomer (e.g., polyacrylic acid (PAA)) may be suppressed. Accordingly, a production yield of the copolymer may be improved, and clogging of polymerization equipment may be suppressed.

According to exemplary embodiments, the monomethyl ether hydroquinone may be included in an amount of 210 ppm or more and less than 2,000 ppm. Accordingly, even if the comonomer is discharged under high temperature and high pressure conditions, a condition where self-polymerization does not occur may be stably maintained, and polymerization reactivity of the ethylene monomer and the comonomer may be improved.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic process flowchart for describing a method of producing a copolymer according to exemplary embodiments;
FIG. 2 is a graph illustrating the crystallization temperature of a comonomer (acrylic acid) according to pressure;
FIG. 3 is a schematic process flowchart for describing a method of producing a copolymer according to exemplary embodiments;
FIG. 4A is a graph illustrating changes in the temperature and pressure of an ultra-high pressure cell in Example 1;
FIG. 4B is a graph illustrating changes in the temperature and pressure of an ultra-high pressure cell in Example 2;
FIG. 4C is a graph illustrating changes in the temperature and pressure of an ultra-high pressure cell in Comparative Example 1;
FIG. 5A is a cross-sectional image of the ultra-high pressure cell captured 10 minutes after reaching the target temperature and pressure in Comparative Example 1;
FIG. 5B is an image of a PAA self-polymer acquired from the ultra-high pressure cell of Comparative Example 1;
FIG. 6A is a graph illustrating changes in the temperature and pressure of the ultra-high pressure cell in Example 1; and
FIG. 6B is a graph illustrating changes in the temperature and pressure of a ultra-high pressure cell in Comparative Example 2.

[DETAILED DESCRIPTION OF THE INVENTION]

The embodiments of the present disclosure provide a method of producing an ethylene-based copolymer, which includes pumping a comonomer through a discharge unit, and is capable of preventing self-polymerization of the comonomer.

The term "(meth)acrylic acid" as used herein is used to mean both acrylic acid and methacrylic acid. The term "(meth)acrylate" as used herein is used to mean both acrylate and methacrylate.

Hereinafter, embodiments of the present disclosure will be described in more detail with reference to specific experimental examples, drawings and the like.

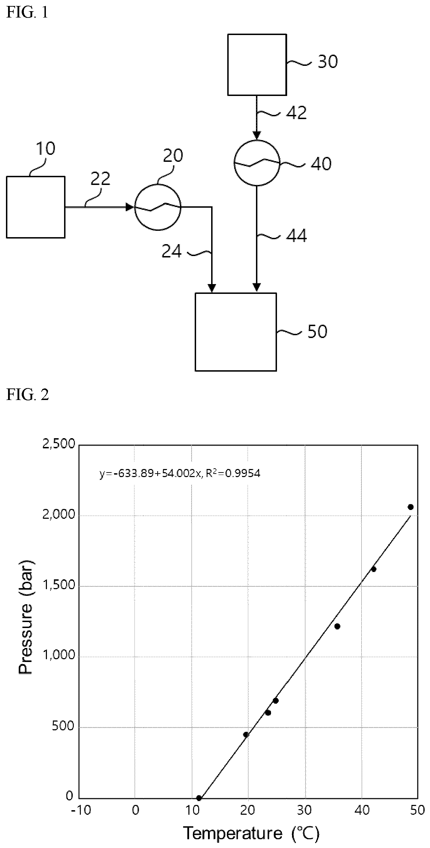

FIG. 1 is a schematic process flowchart for describing a method of producing a copolymer according to exemplary embodiments.

Referring to FIG. 1, a comonomer may be supplied from a first monomer supply unit 10 to a first discharge unit 20.

A first monomer solution may be discharged from the first discharge unit 20. The first discharge unit 20 may include discharge equipment such as a pump, a compressor, etc.

The first monomer solution includes a comonomer and monomethyl ether hydroquinone. The first monomer solution may not include an ethylene monomer.

The comonomer may include a carboxylic acid monomer or an acrylate monomer of which a chain polymerization reaction is possible.

In some embodiments, (meth)acrylic acid may be used as the carboxylic acid monomer. In some embodiments, (meth)acrylate or alkyl (meth)acrylate may be used as the acrylate monomer.

A mixture of the comonomer and monomethyl ether hydroquinone may be delivered from the first monomer supply unit 10 to the first discharge unit 20 through a first flow path 22.

The monomethyl ether hydroquinone may be included as a component that inhibits a polymerization between the comonomers. For example, a self-polymerization of the comonomer may be suppressed even under conditions of high temperature and high pressure due to an interaction between the monomethyl ether hydroquinone and the comonomer.

For example, an active radical may be generated from the comonomer (for example, acrylic acid) under conditions of high temperature and high pressure. The monomethyl ether hydroquinone has a relatively high reactive activity for the active radical, and may easily supply and transfer hydrogen to the active radical. Accordingly, the active radical may be stabilized.

In addition, the radical formed by removing hydrogen from the monomethyl ether hydroquinone may not substantially react with the comonomer, and the first monomer solution may be stabilized.

A content of the monomethyl ether hydroquinone in the first monomer solution is 210 ppm or more based on a total weight of the comonomer. Accordingly, even if the first monomer solution is discharged under high temperature and high pressure conditions, the radical of the comonomer may be consumed within a short period of time by the monomethyl ether hydroquinone. Therefore, the self-polymerization may be effectively suppressed.

For example, if the content of the monomethyl ether hydroquinone is less than 210 ppm, a reaction frequency between the monomethyl ether hydroquinone and the active radical may be substantially reduced. For example, a rate at which the active radical is consumed by the monomethyl ether hydroquinone may be reduced, such that a reaction between the active radical and the comonomer may be further promoted. Accordingly, the self-polymerization of the comonomer may be initiated and propagated by the active radical.

According to exemplary embodiments, the content of the monomethyl ether hydroquinone in the first monomer solution may be less than 2,000 ppm. For example, the content of the monomethyl ether hydroquinone may be 210 ppm or more and less than 2,000 ppm based on the total weight of the comonomer.

For example, when the content of the monomethyl ether hydroquinone is 2,000 ppm or more, the monomethyl ether hydroquinone may exist in an excessively high concentration within the polymerization system. Accordingly, a copolymerization reaction of the ethylene monomer and comonomer may be inhibited, thereby causing a reduction in the process efficiency and a deterioration in the yield of the copolymer.

In some embodiments, the content of the monomethyl ether hydroquinone in the first monomer solution may be 250 ppm to 2,000 ppm, 400 ppm to 1,500 ppm, 450 ppm to 1,000 ppm, or 450 ppm to 800 ppm based on a total weight of the carboxylic acid monomer. Within the above range, the self-polymerization of the comonomer may be effectively suppressed, as well as the yield of the copolymer may be further increased.

The first monomer solution may be discharged from the first discharge unit 20 through a first discharge flow path 24 for copolymerization with, for example, an ethylene monomer. For example, the first monomer solution pumped or discharged from the first discharge unit 20 may be supplied to a reactor 50 through the first discharge flow path 24.

In one embodiment, the first discharge unit 20 may include a piston and a packing part. The packing part may be a sealing member such as a bushing, a cylinder, etc. The first monomer solution may be discharged through a relative reciprocating motion and/or rotational motion of the piston and the packing part.

In some embodiments, a pressure (e.g., a discharge pressure) in the first discharge unit 20 may be 1,500 bar to 3,000 bar. The first monomer solution may be compressed by the first discharge unit 20 and rapidly supplied to the reactor 50.

In one embodiment, the discharge pressure may be 1,500 bar to 2,500 bar, or 1,800 bar to 2,300 bar.

In some embodiments, temperatures (e.g., discharge temperatures) in the first discharge unit 20 and the first discharge flow path 24 may be a crystallization temperature or more of the comonomer.

For example, the discharge temperature may be adjusted within a range of Equation 1 below.

[Equation 1]

$$P+500 < 54.002 \times T < P+3400$$

In Equation 1, P is a discharge pressure of the first discharge unit measured in units of bar, and T is the temperature (°C) in the first discharge flow path.

In one example, as the discharge pressure is increased, the crystallization temperature of the comonomer may be increased. FIG. 2 is a graph illustrating the crystallization temperature of a comonomer (acrylic acid) according to pressure.

Referring to FIG. 2, as the pressure is increased, the crystallization temperature of the comonomer may be increased. For example, the crystallization temperature of acrylic acid is about 48°C at a pressure of about 2,000 bar. Therefore, as the discharge pressure is increased, the acrylic acid may be crystallized even at a relatively high discharge temperature.

When the discharge temperature is the crystallization temperature or lower of the comonomer, the comonomer may be crystallized, such that the first monomer solution may not be pumped or discharged to the reactor 50. In this case, clogging of a gap or the discharge flow path inside the first discharge unit 20 may occur, such that a replacement cycle or cleaning cycle of the device may be shortened.

However, the higher the discharge temperature, the more satisfied an activation energy required for dehydrogenation of the comonomer, such that a concentration of the active radical may be increased. Accordingly, the self-polymerization of the comonomer by the active radical may be increased.

According to exemplary embodiments, the first monomer solution may include 210 ppm or more of monomethyl ether hydroquinone, such that the active radical may be consumed quickly. Thereby, even if increasing the discharge temperature, the concentration of the active radicals may be maintained low. Accordingly, the crystallization and self-polymerization of the comonomer may be suppressed together.

In one embodiment, in Equation 1, $P+500 < 54.002 \times T \le P+3000$, $P+550 \le 54.002 \times T \le P+2800$, or $P+550 \le 54.002 \times T \le P+2000$.

In some embodiments, the temperatures (e.g., the discharge temperatures) in the first discharge unit 20 and the first discharge flow path 24 may be 45°C or higher. Within the above temperature range, the possibility of crystallization of the comonomer may be substantially reduced.

In some embodiments, the temperatures (e.g., the discharge temperatures) in the first discharge unit 20 and the first discharge flow path 24 may be 100°C or lower. Within the above temperature range, the possibility of self-polymerization of the comonomer may be substantially reduced.

In one embodiment, the discharge temperature may be 45°C to 100°C, 48°C to 90°C, 60°C to 90°C, or 60°C to 85°C. Within the above range, a stable discharge process may be continuously maintained without crystallization and self-polymerization of the comonomer even if increasing the discharge pressure.

According to exemplary embodiments, the first monomer solution may not include a solvent. For example, the first monomer solution may be a solvent-free type in which the comonomer acts as a medium.

In one example, when the monomer solution includes a solvent, the density or concentration of the comonomer may be decreased, thereby reducing a reaction between the active radical and the comonomer.

However, in this case, a side reaction between the comonomer and the solvent may occur, and properties of the copolymer may be changed due to the side reaction. In addition, since the solvent has inherent chain transfer properties, it may be difficult to adjust the molecular weight of the copolymer, and a copolymer having a molecular weight within a desired range may not be acquired.

For example, since the first monomer solution includes 210 ppm or more of monomethyl ether hydroquinone, the reactivity between the active radical and the monomethyl ether hydroquinone may be improved even if it does not include the solvent. Accordingly, the active radical may be rapidly consumed in the first monomer solution, and the self-polymerization of the comonomer may be effectively suppressed.

In some embodiments, a lubricant composition may be supplied together with the first monomer solution into the first discharge unit 20. The lubricant composition includes a mineral oil, and may further include a self-polymerization inhibitor such as a phenothiazine compound.

Even when the phenothiazine compound is included in a small amount or not included as described above, the formation of the self-polymer (e.g., PAA) by the above-described monomethyl ether hydroquinone may be sufficiently suppressed.

A second monomer solution stored in a second monomer supply unit 30 may be moved to a second discharge unit 40 through a second flow path 42. For example, the second monomer solution may be a solvent-free type in which the second monomer acts as a medium.

For example, the first monomer solution and the second monomer solution may be introduced into the reactor 50 through different paths, respectively. The second monomer solution may come into contact with the first monomer in the reactor 50 to be copolymerized.

Since the first monomer is discharged through a separate discharge unit from the second monomer, discharge conditions (pressure, temperature, etc.) of the first monomer and the second monomer may be respectively adjusted.

For example, in the second discharge unit 40 which discharges the second monomer, a relatively high pressure is required. Thus, when the comonomer is supplied through the second discharge unit 40, equipment defects such as clogging, plugging, and flow path blocking, etc. may occur.

The second monomer solution may include an ethylene monomer in a supercritical state. For example, the second monomer solution may be composed of an ethylene monomer in a supercritical state. As a non-limiting example, the second monomer solution may be mixed with the first monomer solution, a polymerization initiator, and/or a chain transfer agent before being injected into the reactor. For example, the second monomer solution may be mixed with a polymerization initiator, and/or a chain transfer agent after being injected into the reactor.

The second monomer may include an ethylene monomer. For example, when ethylene is used as the ethylene monomer, copolymerization of the comonomer and ethylene may be performed within the reactor 50 to produce an ethylene-based copolymer.

For example, when a carboxylic acid monomer is used as the comonomer, an ethylene-carboxylic acid copolymer (for example, an EAA copolymer) may be produced. For example, when an acrylate monomer is used as the comonomer, an ethylene-acrylate copolymer and/or an ethylene-(alkyl)acrylate copolymer may be produced.

In some embodiments, the second monomer solution may be discharged from the second discharge unit 40 to be injected into the reactor 50 through the second discharge flow path 44. The first monomer solution and the second monomer solution may be supplied into the reactor 50 through different discharge flow paths, thereby preventing copolymerization from initiating or being promoted within the discharge flow path.

In some embodiments, a polymerization initiator may be introduced into the reactor 50 together through the second discharge flow path 44 or through a separate flow path. Accordingly, the self-polymerization of the comonomer may be prevented from being promoted first.

For example, initiators known in the field of polymer polymerization may be used as the polymerization initiator. For example, peroxide or a peroxy compound, an azobis compound, etc. may be used as the polymerization initiator.

In some embodiments, a chain transfer agent may be introduced during the polymerization process, for example, through the second discharge flow path 44. The molecular weight and molecular weight distribution of a polymer product may be easily controlled within a desired range through the chain transfer agent.

The chain transfer agent may include, for example, a nonpolar organic compound such as isobutane, propene, etc., or a polar organic compound such as methyl ethyl ketone, isopropylaldehyde, or vinyl acetate, etc.

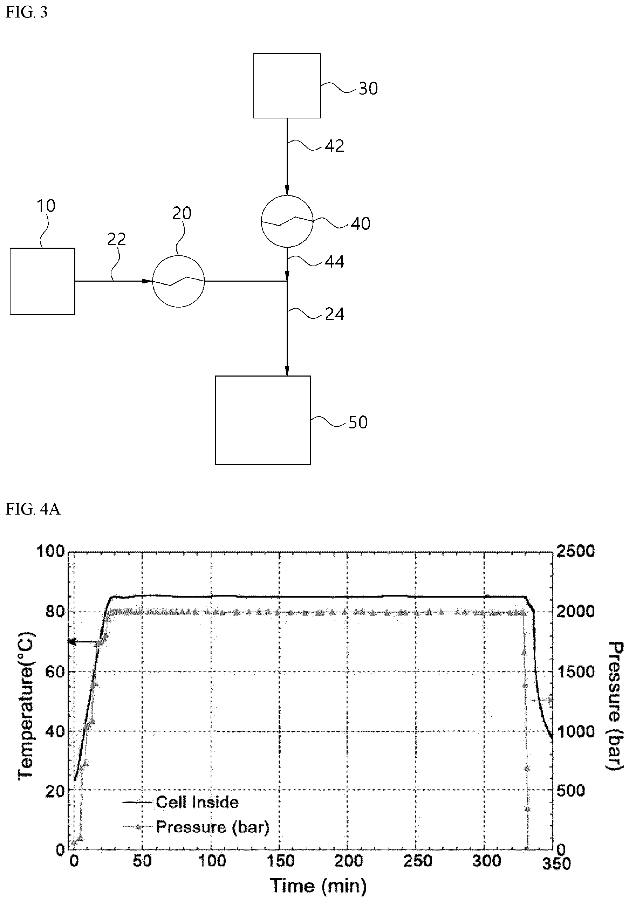

FIG. 3 is a schematic process flowchart for describing a method of producing a copolymer according to exemplary embodiments.

Referring to FIG. 3, the first monomer solution and the second monomer solution may be supplied through the same discharge flow path. For example, both the first discharge unit 20 and the second discharge unit 40 may be connected to the first discharge flow path 24.

In an embodiment, the monomer solution and the ethylene monomer may be introduced into the reactor through different paths, respectively.

The first monomer solution may be supplied from the first discharge unit 20 to the reactor 50 through the first discharge flow path 24. the second monomer solution may be injected into the reactor 50 from the second discharge unit 40 through a second discharge flow path 44 and a first discharge flow path 24 in sequence.

In an embodiment, the second monomer solution 30 may be discharged from the second discharge unit 40 to the second discharge flow path 44, and then supplied from the second discharge flow path 44 to the first discharge flow path 24, before being injected into the reactor 50 through the first discharge flow path 24.

In an embodiment, the first monomer solution may be supplied from the first discharge unit 20 to the reactor 50 through the first discharge flow path 24. The supply of the first monomer solution may be blocked, and the second monomer solution may be injected into the reactor 50 from the second discharge unit 40 through the first discharge flow path 24.

Accordingly, the first monomer solution and the second monomer solution may be prevented from coming into contact with each other before being introduced into the reactor 50. Therefore, clogging of the first discharge flow path 24 may be prevented, and fouling and a reduction in the process efficiency due to ethylene-based copolymer may be suppressed.

In some embodiments, the temperature in the reactor 50 may be higher than the temperature in the first discharge unit 20. For example, the temperature in the reactor 50 may be about 150°C to 270°C.

In some embodiments, the pressure in the reactor 50 may be 1100 bar to 2500 bar, or 1300 bar to 2300 bar. In one embodiment, the pressure in the reactor 50 may be lower than the discharge pressure in the second discharge unit 40.

The ethylene-based copolymer produced by the method according to the above-described embodiments may be applied to various fields such as a sealing material, an adhesive, a packing material, an optical film and the like. For example, the ethylene-based copolymer may be applied to the surface of a polymer film, a paper sheet, a metal foil, fabrics, etc., to be provided as a packaging material for food or a coating material for food.

The embodiments of the present disclosure described above include the following aspects, and can be implemented through at least one of the following aspects.

According to the first aspect of a method of producing an ethylene-based copolymer including: discharging a monomer solution including a comonomer and monomethyl ether hydroquinone into a reactor (50) through a first discharge unit (20); and reacting an ethylene monomer with the comonomer by injecting the ethylene monomer into the reactor (50), wherein a content of the monomethyl ether hydroquinone in the monomer solution is 210 ppm or more based on a total weight of the comonomer.

In the first aspect, according to the second aspect of the method of producing an ethylene-based copolymer, the content of the monomethyl ether hydroquinone in the monomer solution may be 210 ppm or more and less than 2,000 ppm based on the total weight of the comonomer.

In the first or the second aspect, according to the third aspect of the method of producing an ethylene-based copolymer, the step of reacting an ethylene monomer with the comonomer may include discharging the ethylene monomer into the reactor (50) through a second discharge unit (40).

In the third aspect, according to the fourth aspect of the method of producing an ethylene-based copolymer, the monomer solution and the ethylene monomer are introduced into the reactor (50) through different paths, respectively.

In the fourth aspect, according to the fifth aspect of the method of producing an ethylene-based copolymer, the monomer solution may be supplied from the first discharge unit (20) to the reactor (50) through a first discharge flow path (24), and the ethylene monomer may be supplied from the second discharge unit (40) to the reactor (50) through a second discharge flow path (44).

In the fifth aspect, according to the sixth aspect of the method of producing an ethylene-based copolymer, a temperature in the first discharge unit (20) and the first discharge flow path (24) may be a crystallization temperature or higher of the comonomer.

In the sixth aspect, according to the seventh aspect of the method of producing an ethylene-based copolymer" the temperature in the first discharge flow path (24) may be adjusted within a range of Equation 1 below:

[Equation 1]

$$P+500\ ^{\circ}C < 54.002 \times T < P+3400\ ^{\circ}C$$

In Equation 1, P may be a discharge pressure of the first discharge unit (20) measured in units of bar, and T may be the temperature in the first discharge flow path (24).

In the sixth or the seventh aspect, according to the eighth aspect of the method of producing an ethylene-based copolymer, a pressure in the first discharge unit (20) may be 1,500 bar to 3,000 bar.

In the third aspect to the eighth aspect, according to the ninth aspect of the method of producing an ethylene-based copolymer, the step of reacting an ethylene monomer with the comonomer may include injecting the ethylene monomer from the second discharge unit (40) into the reactor (50) after the monomer solution is supplied from the first discharge unit (20) to the reactor (50).

In the first aspect to the ninth aspect, according to the tenth aspect of the method of producing an ethylene-based copolymer, the comonomer may include a carboxylic acid monomer or an acrylate monomer.

In the tenth aspect, according to the eleventh aspect of the method of producing an ethylene-based copolymer, the carboxylic acid monomer may include acrylic acid or methacrylic acid.

In the first aspect to the eleventh aspect, according to the twelfth aspect of the method of producing an ethylene-based copolymer, the method may further include supplying a lubricant composition into the first discharge unit (20).

Hereinafter, experimental examples including specific examples and comparative examples are proposed to facilitate understanding of the present disclosure.

**Experimental Example 1**

**Example 1**

A monomer solution was prepared by mixing acrylic acid (AA) (99% purity, manufactured by Sigma-Aldrich) with 500 ppm of monomethyl ether hydroquinone (MeHQ).

The monomer solution was filled into an ultra-high pressure view cell (manufactured by Dong-A University), and the target temperature and pressure were set to be 85°C and 2,000 bar, respectively. A generation of a self-polymer was observed while aging at the target temperature and pressure.

It was evaluated that the self-polymer was generated at the point when the temperature and pressure of the ultra-high pressure cell are rapidly decreased.

**Example 2**

The generation of the self-polymer was observed by the same evaluation method as in Example 1, except that the content of the monomethyl ether hydroquinone (MeHQ) was changed to 700 ppm.

**Comparative Example 1**

The generation of the self-polymer was observed by the same evaluation method as in Example 1, except that the content of the monomethyl ether hydroquinone (MeHQ) was changed to 200 ppm.

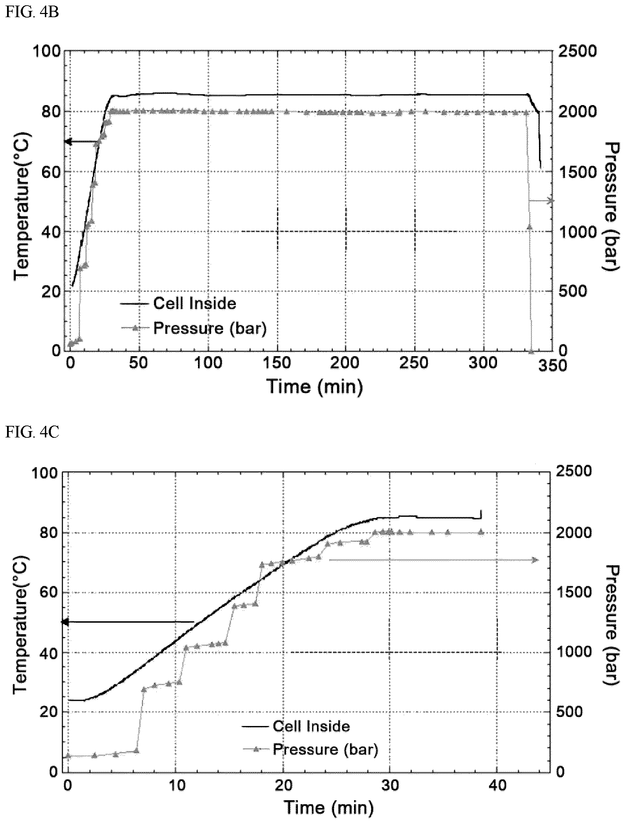

FIG. 4A is a graph illustrating changes in the temperature and pressure of an ultra-high pressure cell in Example 1. FIG. 4B is a graph illustrating changes in the temperature and pressure of an ultra-high pressure cell in Example 2. FIG. 4C is a graph illustrating changes in the temperature and pressure of an ultra-high pressure cell in Comparative Example 1.

Referring to FIGS. 4A to 4C, in Examples 1 and 2, the self-polymer was generated about 5 hours after reaching the target temperature and pressure. In Examples 1 and 2, the monomer solution was maintained in a stable state at the target temperature and pressure for about 5 hours.

However, in Comparative Example 1, the self-polymer was generated about 10 minutes after reaching the target temperature and pressure.

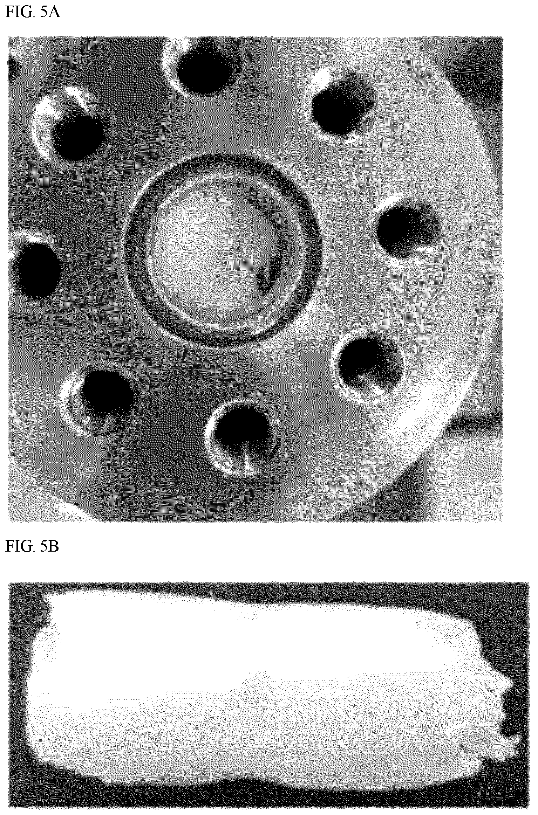

FIG. 5A is a cross-sectional image of the ultra-high pressure cell captured 10 minutes after reaching the target temperature and pressure in Comparative Example 1. FIG. 5B is an image of a PAA self-polymer acquired from the ultra-high pressure cell of Comparative Example 1. Referring to FIGS. 5A and 5B, in Comparative Example 1, the PAA polymer was formed within a short period of time, thereby causing plugging in the gap and flow path of the ultra-high pressure cell.

## Experimental Example 2

### Example 3

The generation of the self-polymer was observed by the same evaluation method as in Example 1, except that the target temperature and pressure were set to be 100°C and 2,000 bar, respectively.

### Comparative Example 2

The generation of the self-polymer was observed by the same evaluation method as in Example 1, except that the target temperature and pressure were set to be 65°C and 2,000 bar, respectively.

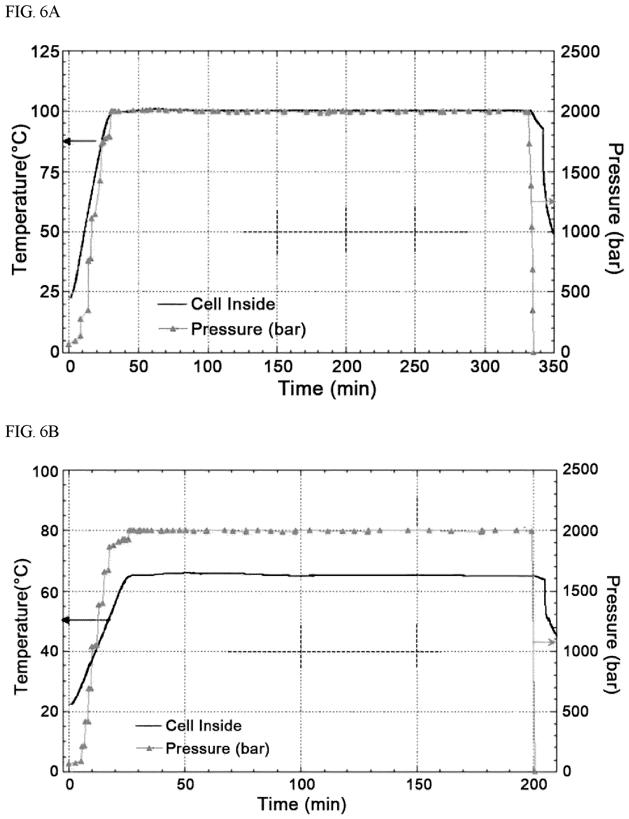

FIG. 6A is a graph illustrating changes in the temperature and pressure of the ultra-high pressure cell in Example 1. FIG. 6B is a graph illustrating changes in the temperature and pressure of a ultra-high pressure cell in Comparative Example 2

Referring to FIGS. 6A and 6B, in Example 3, even if the target temperature was increased to 100°C, the monomer solution was maintained in a stable state for about 5 hours.

However, in Comparative Example 2, even though the target temperature was decreased to 65°C, the self-polymer was generated before 3 hours had passed since reaching the target temperature and pressure.

## Experimental Example 3

A monomer solution was prepared by mixing acrylic acid (AA) (99% purity, manufactured by Sigma-Aldrich) with monomethyl ether hydroquinone (MeHQ).

The monomer solution was filled into an ultra-high pressure view cell (manufactured by Dong-A University), and the target temperature and pressure were set to be 85°C and 2,000 bar, respectively. Aging was performed for 5 hours at the target temperature and pressure. The content of the monomethyl ether hydroquinone (MeHQ), target temperature and pressure were adjusted as described in Table 1 below.

The content of MeHQ before aging and the content of MeHQ after aging were measured using high performance liquid chromatography (HPLC). When the MeHQ content was not measured, it was indicated as "-," and when it was measured to be less than 10 $\mu$m/g, it was indicated as "<10" in Table 1.

Liquid chromatography analysis was performed using Shimadzu's LC-10AD, and a C-18 column was used for measurement under a solvent condition of acetonitrile:methanol = 4:1 (v/v).

When PAA polymerization is performed in the monomer solution, MeHQ is consumed, such that the frequency of PAA polymerization can be confirmed through a residual amount of the MeHQ.

The contents of acrylic acid dimer (AA dimer) before and after aging were measured using gas chromatography (GC). When the AA dimer content was not measured, it was indicated as "-", and when it was measured to be less than 0.1 wt%, it was indicated as "<0.1" in Table 1.

Gas chromatography analysis was performed using Agilent's 6890A, and FID detector and DB-5 column (60 m $\times$ 0.32 mm $\times$ 1.0 $\mu$m) were used for measurement.

In the process of aging the monomer solution, acrylic acid monomers form AA dimers. When performing the PAA polymerization reaction, the AA dimer may be converted to PAA, such that the content of the AA dimer may be decreased. Therefore, the frequency of an occurrence of the PAA polymerization reaction may be confirmed through the residual amount of the AA dimer.

[TABLE 1]

| Division | MeHQ Content (ppm) | Pressure (bar) | Temperature (°C) | MeHQ ($\mu$m/g) | | AA dimer (wt%) | |
|---|---|---|---|---|---|---|---|
| | | | | Before aging | After aging | Before aging | After aging |
| Example 1 | 500 | 2000 | 85 | 502 | 488 | <0.1 | 25.44 |

(continued)

| Division | MeHQ Content (ppm) | Pressure (bar) | Temperature (°C) | MeHQ ($\mu$m/g) | | AA dimer (wt%) | |
|---|---|---|---|---|---|---|---|
| | | | | Before aging | After aging | Before aging | After aging |
| Example 2 | 700 | 2000 | 85 | 701 | 691 | <0.1 | 9.08 |
| Example 3 | 500 | 2000 | 100 | 535 | 569 | <0.1 | 70.74 |
| Example 4 | 700 | 2000 | 100 | 703 | 699 | <0.1 | 66.97 |
| Example 5 | 1000 | 2000 | 85 | 1,054 | 1,081 | <0.1 | 12.3 |
| Example 6 | 1000 | 2000 | 100 | 1,023 | 995 | <0.1 | 68.61 |
| Comparative Example 1 | 200 | 2000 | 85 | 198 | - | <0.1 | - |
| Comparative Example 2 | 200 | 2000 | 65 | 203 | <10 | <0.1 | 2.23 |

Referring to Table 1 above, in the examples, MeHQ was not substantially consumed in the monomer solution in the aging process. In addition, the content of AA dimer was increased after aging.

However, in the comparative examples, MeHQ was consumed in the aging process, such that only a relatively small amount thereof remained. In addition, the AA dimer was not measured or was measured in a small amount after aging.

**Claims**

1. A method of producing an ethylene-based copolymer comprising:

    discharging a monomer solution including a comonomer and monomethyl ether hydroquinone into a reactor (50) through a first discharge unit (20); and
    reacting an ethylene monomer with the comonomer by injecting the ethylene monomer into the reactor (50), wherein a content of the monomethyl ether hydroquinone in the monomer solution is 210 ppm or more based on a total weight of the comonomer.

2. The method of producing an ethylene-based copolymer according to claim 1, wherein the content of the monomethyl ether hydroquinone in the monomer solution is 210 ppm or more and less than 2,000 ppm based on the total weight of the comonomer.

3. The method of producing an ethylene-based copolymer according to claim 1 or 2, wherein the step of reacting the ethylene monomer with the comonomer comprises discharging the ethylene monomer into the reactor (50) through a second discharge unit (40).

4. The method of producing an ethylene-based copolymer according to claim 3, wherein the monomer solution and the ethylene monomer are introduced into the reactor (50) through different paths, respectively.

5. The method of producing an ethylene-based copolymer according to claim 4, wherein the monomer solution is supplied from the first discharge unit (20) to the reactor (50) through a first discharge flow path (24), and the ethylene monomer is supplied from the second discharge unit (40) to the first discharge unit (20) through a second discharge flow path (44), and supplied to the reactor (50) through the first discharge flow path (24),

6. The method of producing an ethylene-based copolymer according to claim 5, wherein a temperature in the first discharge unit (20) and the first discharge flow path (24) is a crystallization temperature or higher of the comonomer.

7. The method of producing an ethylene-based copolymer according to claim 6, wherein the temperature in the first discharge flow path (24) is adjusted within a range of Equation 1 below:

[Equation 1]

$$P+500\ °C < 54.002 \times T < P+3400\ °C$$

wherein in Equation 1, P is a discharge pressure of the first discharge unit (20) measured in units of bar, and T is the temperature in the first discharge flow path (24).

8. The method of producing an ethylene-based copolymer according to claim 3, wherein the monomer solution and the ethylene monomer are introduced into the reactor (50) through a common path (24) connecting said reactor (50) to said first discharge unit (20) and said second discharge unit (40).

9. The method of producing an ethylene-based copolymer according to anyone of claims 1 to 8, wherein a pressure in the first discharge unit (20) is 150 MPa to 300 MPa.

10. The method of producing an ethylene-based copolymer according to anyone of claims 3 to 9, wherein the step of reacting the ethylene monomer with the comonomer comprises discharging an ethylene monomer and a monomer solution from separate discharge units(20 and 40); supplying the ethylene monomer and the monomer solution to a same flow path(24); and injecting a mixture of the ethylene monomer and the monomer solution into a reactor(50).

11. The method of producing an ethylene-based copolymer according to anyone of claims 1 to 10, wherein the comonomer comprises a carboxylic acid monomer or an acrylate monomer.

12. The method of producing an ethylene-based copolymer according to claim 11, wherein the carboxylic acid monomer comprises acrylic acid or methacrylic acid.

13. The method of producing an ethylene-based copolymer according to anyone of claims 1 to 12, further comprising supplying a lubricant composition into the first discharge unit (20).

14. The method of producing an ethylene-based copolymer according to anyone of claims 1 to 13, wherein a.) the temperature in the reactor (50) is higher than the temperature in the first discharge unit (20) and/or b.) the temperature in the reactor (50) ranges from 150°C to 270°C or from 180°C to 240°C and the temperature in the first discharge unit (20) ranges from 45°C to 100°C or from 60°C to 90°C, and/or c.) the pressure in the reactor (50) ranges from 110 MPa to 250MPa or from 130 MPa to 230 MPA.

15. Use of the method of producing an ethylene-based copolymer according to anyone of claims 1 to 14 for producing a sheet-like material such as polymer film, a paper sheet, a metal foil or a fabric, etc., as a packaging material for food, wherein the ethylene-based copolymer is applied as a layer or surface layer to a substrate of said sheet like material.

FIG. 1

FIG. 2

$y = -633.89 + 54.002x$, $R^2 = 0.9954$

FIG. 3

FIG. 4A

FIG. 4B

FIG. 4C

FIG. 5A

FIG. 5B

FIG. 6A

FIG. 6B

Europäisches
Patentamt

European
Patent Office

Office européen
des brevets

# EUROPEAN SEARCH REPORT

**Application Number**

EP 25 15 5312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 763 779 A1 (SK INNOVATION CO LTD [KR]; SK GLOBAL CHEMICAL CO LTD [KR]) 13 January 2021 (2021-01-13) * paragraph [0004] * * paragraph [0028] * * paragraph [0040] * * claims 1,8,14 * | 1-15 | INV. C08F210/02 |
| X | EP 0 207 161 A1 (SUMITOMO CHEMICAL CO [JP]) 7 January 1987 (1987-01-07) * page 18, example 2 * * pages 21-22, example 3 * * figure 1 * | 1-11, 13-15 | |
| X | US 5 059 662 A (WIKELSKI KARL W [US] ET AL) 22 October 1991 (1991-10-22) * column 7, example 1 * * column 8, line 66 - column 9, line 19 * | 1-5, 8-11, 13-15 | |
| X | EP 0 463 519 A1 (HOECHST AG [DE]) 2 January 1992 (1992-01-02) * page 5, table 1, example 2 * | 1-5, 8-11,13, 14 | **TECHNICAL FIELDS SEARCHED (IPC)** C08F |
| X | WO 2016/209381 A1 (DOW GLOBAL TECHNOLOGIES LLC [US]) 29 December 2016 (2016-12-29) * page 19, lines 1-10 * * pages 26-27, example 1 * | 1-5, 8-11, 13-15 | |

The present search report has been drawn up for all claims

| Place of search | Date of completion of the search | Examiner |
|---|---|---|
| Munich | 25 June 2025 | Luka, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 5312

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | | Publication date | Patent family member(s) | | Publication date |
|---|---|---|---|---|---|
| EP 3763779 | A1 | 13-01-2021 | CN | 112210024 A | 12-01-2021 |
| | | | EP | 3763779 A1 | 13-01-2021 |
| | | | ES | 2964214 T3 | 04-04-2024 |
| | | | JP | 2021014576 A | 12-02-2021 |
| | | | JP | 2024155965 A | 31-10-2024 |
| | | | KR | 20210006634 A | 19-01-2021 |
| | | | US | 2021009919 A1 | 14-01-2021 |
| EP 0207161 | A1 | 07-01-1987 | BR | 8507076 A | 14-07-1987 |
| | | | EP | 0207161 A1 | 07-01-1987 |
| | | | JP | H0326688 B2 | 11-04-1991 |
| | | | JP | S61127709 A | 16-06-1986 |
| | | | KR | 870700648 A | 30-12-1987 |
| | | | SG | 70890 G | 26-10-1990 |
| | | | US | 4721761 A | 26-01-1988 |
| | | | WO | 8603207 A1 | 05-06-1986 |
| US 5059662 | A | 22-10-1991 | JP | 2516003 B2 | 10-07-1996 |
| | | | JP | S63186710 A | 02-08-1988 |
| | | | US | 5059662 A | 22-10-1991 |
| EP 0463519 | A1 | 02-01-1992 | AT | E145929 T1 | 15-12-1996 |
| | | | CA | 2045157 A1 | 30-12-1991 |
| | | | DE | 4020639 A1 | 02-01-1992 |
| | | | DK | 0463519 T3 | 23-12-1996 |
| | | | EP | 0463519 A1 | 02-01-1992 |
| | | | ES | 2097165 T3 | 01-04-1997 |
| | | | JP | H0733402 B2 | 12-04-1995 |
| | | | JP | H04226513 A | 17-08-1992 |
| | | | KR | 920000806 A | 29-01-1992 |
| | | | SG | 44815 A1 | 19-12-1997 |
| | | | US | 5145923 A | 08-09-1992 |
| | | | ZA | 914806 B | 29-04-1992 |
| WO 2016209381 | A1 | 29-12-2016 | BR | 112017027273 A2 | 04-09-2018 |
| | | | CN | 107787335 A | 09-03-2018 |
| | | | EP | 3313905 A1 | 02-05-2018 |
| | | | ES | 2799524 T3 | 18-12-2020 |
| | | | JP | 6865178 B2 | 28-04-2021 |
| | | | JP | 2018518576 A | 12-07-2018 |
| | | | KR | 20180022790 A | 06-03-2018 |
| | | | US | 2018134825 A1 | 17-05-2018 |
| | | | WO | 2016209381 A1 | 29-12-2016 |

EPO FORM P0459

For more details about this annex : see Official Journal of the European Patent Office, No. 12/82